# EUROPÄISCHE PATENTANMELDUNG

(11) **EP 2 980 396 A1**
(43) Veröffentlichungstag der Anmeldung: **03.02.2016**
(21) Anmeldenummer: 15172026.5
(22) Anmeldetag: 15.06.2015
(51) Int. Cl.: F02M 55/00, F16L 15/00, F16B 33/00, F16B 39/28

(54) **HOCHDRUCKANSCHLUSSVORRICHTUNG, VERFAHREN UND WERKZEUG ZUR HERSTELLUNG EINER HOCHDRUCKANSCHLUSSVORRICHTUNG UND KRAFTSTOFFEINSPRITZVENTIL MIT EINER HOCHDRUCKANSCHLUSSVORRICHTUNG**

(30) Priorität: 28.07.2014 DE 102014214788
(71) Anmelder: ROBERT BOSCH GMBH, 70442 Stuttgart (DE)
(72) Erfinder: Brinkmann, Jens, 70839 Gerlingen (DE); Nagel, Jens-Peter, 71672 Marbach (DE); Schuppert, Manfred, 70736 Fellbach (DE); Lalic, Hrvoje, 71636 Ludwigsburg (DE)

(57) **Zusammenfassung**

Die Erfindung betrifft eine Hochdruckanschlussvorrichtung (10) an einem ersten Bauteil (11), wobei das erste Bauteil (11) ein Gewinde (16) mit einem Gewindegang (17) aufweist, wobei das Gewinde (16) dazu ausgebildet ist, mit einem Gegengewinde (7) eines zweiten Bauteils (5) zusammenzuwirken, und wobei das erste Bauteil (11) mit Mitteln zur Erhöhung des Lösemoments für das Gegengewinde (7) ausgestattet ist. Erfindungsgemäß ist es vorgesehen, dass die Mittel reibungserhöhende Maßnahmen (22; 27) an dem Gewindegang (17) umfassen.

## Beschreibung

### Stand der Technik

Die Erfindung betrifft eine Hochdruckanschlussvorrichtung nach dem Oberbegriff des Anspruchs 1. Ferner betrifft die Erfindung ein Verfahren und ein Werkzeug zur Herstellung einer Hochdruckanschlussvorrichtung sowie ein Kraftstoffeinspritzventil mit einer erfindungsgemäßen Hochdruckanschlussvorrichtung.

Eine Hochdruckanschlussvorrichtung nach dem Oberbegriff des Anspruchs 1 ist aus der DE 101 25 439 A1 der Anmelderin bekannt. Die bekannte Hochdruckanschlussvorrichtung ist im Bereich eines Gehäuses eines Kraftstoffeinspritzventils ausgebildet, das ein erstes Bauteil ausbildet, und umfasst einen ein zweites Bauteil ausbildenden Druckrohrstutzen mit einem Außengewinde, der in ein gegengleiches Innengewinde des Gehäuses einschraubbar ist. Auf der dem Gehäuse abgewandten Seite des Druckrohrstutzens ist über ein weiteres Außengewinde am Druckrohrstutzen eine Kraftstoffzuführleitung aufschraubbar. Im Bereich der Gewindeverbindung zwischen dem Gehäuse des Kraftstoffeinspritzventils und dem Außengewinde des Druckrohrstutzens ist ein stiftförmiges Sicherungselement angeordnet, das ein unbeabsichtigtes Losdrehen bzw. Lösen des eingeschraubten Druckrohrstutzens verhindern soll. Dadurch, dass ein separates Bauteil zur Sicherung bzw. zum Verhindern des Lösens des Druckrohrstutzens aus dem Gehäuse verwendet wird, ist die aus der genannten Schrift bekannte Hochdruckanschlussvorrichtung relativ aufwendig ausgebildet.

Neben den aus der genannten Schrift bekannten Kraftstoffeinspritzventilen, bei denen die Kraftstoffversorgung des Kraftstoffeinspritzventils über einen mit dem Gehäuse des Kraftstoffeinspritzventils verbundenen Druckrohrstutzen erfolgt, sind aus dem Stand der Technik darüber hinaus Anwendungen bekannt, bei denen an dem Gehäuse des Kraftstoffeinspritzventils unmittelbar, d.h. ohne Verwendung eines Druckrohrstutzens, ein Außengewinde am einem Kraftstoffanschlussstutzen zur Verbindung mit einer Kraftstoffzuführleitung ausgebildet ist. Zur hochdruckfesten Verbindung der Kraftstoffzuführleitung mit dem Kraftstoffanschlussstutzen weist die Kraftstoffzuführleitung eine das zweite Bauteil ausbildende Überwurfmutter mit einem Innengewinde auf, das auf das Außengewinde des Kraftstoffanschlussstutzen, der das erste Bauteil ausbildet, aufschraubbar ist.

In der Praxis kommt es vor, dass bei einem Fahrzeughersteller ein und derselbe Typ von Kraftstoffeinspritzventil mit Kraftstoffzuführleitungen kombiniert werden, die von unterschiedlichen Zulieferern stammen. Einflüsse, welche durch die Überwurfmutter der Kraftstoffzuführleitung auf das Außengewinde des Kraftstoffeinspritzventils wirken, sind schwierig abzuschätzen. Derartige Einflüsse können beispielsweise in der Verwendung unterschiedlicher Materialien oder Herstellungsmethoden der Überwurfmutter, bei identischer Geometrie der Überwurfmuttern, bestehen. Wesentlich bei einer in einem Fahrzeug montierten Kraftstoffeinspritzeinlage ist es, dass eine einmal an einem Kraftstoffeinspritzventil montierte bzw. befestigte Kraftstoffzuführleitung sicher befestigt ist, d.h., dass ein bestimmtes Lösemoment zum Wiederlösen der Kraftstoffzuführleitung von dem Einspritzventil sichergestellt ist. Aufgrund der erwähnten Einflüsse bei Verwendung aus unterschiedlichen Quellen stammenden Kraftstoffzuführleitungen ist das erforderliche Lösemoment jedoch Schwankungen unterworfen, so dass insbesondere ein bestimmtes Mindestlösemoment ohne zusätzliche Maßnahmen nicht sichergestellt ist.

### Offenbarung der Erfindung

Ausgehend von dem dargestellten Stand der Technik liegt der Erfindung die Aufgabe zugrunde, eine Hochdruckanschlussvorrichtung bzw. ein Verfahren zur Herstellung einer Hochdruckanschlussvorrichtung nach dem Oberbegriff der beiden unabhängigen Ansprüche derart weiterzubilden, dass eine vereinfachte Erhöhung des erforderlichen Lösemoments an dem ersten Bauteil, insbesondere in Form eines Kraftstoffeinspritzventils, ermöglichbar ist. Insbesondere soll dadurch ein bestimmtes Mindestlösemoment für die ein zweites Bauteil ausbildende Kraftstoffzuführleitung erzielt werden.

Diese Aufgabe wird erfindungsgemäß bei einer Hochdruckanschlussvorrichtung mit den Merkmalen des Anspruchs 1 dadurch gelöst, dass die Mittel zur Erhöhung des Lösemoments reibungserhöhende Maßnahmen an dem Gewindegang des ersten Bauteils umfassen. Es ist daher, im Gegensatz zum Stand der Technik, kein separates Bauelement erforderlich, das zum einen die Herstellkosten der Hochdruckanschlussvorrichtung erhöht, und zum anderen ggf. eine zusätzliche, gezielte Betätigung erforderlich macht, um die Gewindeverbindung an dem ersten Bauteil wieder lösen zu können.

Vorteilhafte Weiterbildungen der erfindungsgemäßen Hochdruckanschlussvorrichtung sind in den Unteransprüchen aufgeführt.

In einer bevorzugten Ausgestaltung der Erfindung ist es vorgesehen, dass die reibungserhöhenden Maßnahmen eine von der Idealform des Gewindegangs an dem ersten Bauteil abweichende Geometrie des Gewindegangs umfasst. Insbesondere wird eine derartige, von der Idealform abweichende Geometrie des Gewindegangs durch eine Deformation des Gewindegangs ausgebildet. Falls eine derartige Deformation durch einen kostengünstigen Umformprozess erzielbar ist, kann diese über die gesamte Länge des Gewindegangs ausgebildet sein.

Vorzugsweise sind die reibungserhöhenden Maßnahmen lediglich an einem Teilbereich des Gewindegangs ausgebildet. Dadurch wird zum einen der erforderliche Aufwand bei der Ausbildung der Maßnahmen verringert, und zum anderen lassen sich die Maßnahmen besonders gezielt bzw. mit hoher Genauigkeit fertigungstechnisch ausführen. Dies rührt daher, dass beispielsweise bei einer Deformation der Geometrie des Gewindegangs über die gesamte Länge des Gewindes die erforderliche Deformation zur Erzielung eines bestimmten Lösemoments geringer ausgebildet sein muss als wenn die Deformation lediglich in einem Teilbereich des Gewindegangs ausgebildet ist. Da sich in der Regel eine größere Deformation jedoch mit höherer Genauigkeit ausbilden lässt als eine vergleichsweise geringe Deformation, lässt sich insgesamt gesehen somit auch das Lösemoment besser bzw. genauer einstellen.

Bei der Ausbildung der reibungserhöhenden Maßnahmen an einem Teilbereich des Gewindegangs kann dieser Teilbereich in einem Teil der Länge des Gewindes und/oder einem Teil des Querschnitts des Gewindes bestehen.

Insbesondere ist es vorgesehen, dass die erfindungsgemäße Hochdruckanschlussvorrichtung als Teil einer Komponente einer Kraftstoffeinspritzeinrichtung, insbesondere eines Gehäuses eines Kraftstoffeinspritzventils ausgebildet ist, wobei das Gewinde ein Außengewinde ist.

Die Erfindung umfasst auch ein Verfahren zur Herstellung einer Hochdruckanschlussvorrichtung, bei dem an einem ersten Bauteil ein Gewinde mit einem Gewindegang durch einen spanlosen Umformvorgang erzeugt wird. Erfindungsgemäß ist es vorgesehen, dass die Geometrie des Gewindegangs mit reibungserhöhenden Maßnahmen versehen wird. Unter einem spanlosen Umformvorgang zur Erzeugung des Gewindegangs wird dabei insbesondere der Fertigungsschritt des Rollierens verstanden.

Besonders bevorzugt ist es, wenn die reibungserhöhenden Maßnahmen gleichzeitig mit der Herstellung des Gewindegangs erzeugt werden. Mit anderen Worten gesagt bedeutet dies, dass zur Erzeugung der reibungserhöhenden Maßnahmen kein separater, die Herstellung verteuernder zusätzlicher Fertigungsschritt erforderlich ist.

Insbesondere werden die reibungserhöhenden Maßnahmen durch eine zumindest bereichsweise Deformation des Gewindegangs erzeugt. Dies findet bevorzugt, jedoch nicht einschränkend, durch dasselbe Werkzeug statt, mit dem auch der Gewindegang an dem Bauteil ausgebildet wird. Mit anderen Worten gesagt bedeutet dies, dass ein Werkzeug zum Herstellen des Gewindegangs durch eine von der Idealform abweichende Geometrie derart modifiziert wird, dass gleichzeitig mit dem Ausbilden des Gewindegangs dieser bereichsweise mit Deformationen versehen wird.

Weiterhin umfasst die Erfindung ein Werkzeug zum spanlosen Herstellen einer Hochdruckanschlussvorrichtung an einem ersten Bauteil, wobei das Werkzeug einen die Geometrie an einem Gewindegang des ersten Bauteils ausbildenden Formbereich aufweist. Erfindungsgemäß ist es vorgesehen, dass der Formbereich zumindest in einem Teilbereich eine durch einen Strahlprozess hervorgerufene erhöhte Rauigkeit aufweist. Hintergrund hierfür ist, dass üblicherweise zum Ausbilden des Gewindegangs an dem ersten Bauteil ein Rollier- bzw. Walzwerkzeug eingesetzt wird, welches in dem Formbereich eine insbesondere durch einen Schleifprozeß hervorgerufene, relativ glatte Oberfläche aufweist. Diese relativ glatte Oberfläche überträgt sich beim Einprägen bzw. Rollieren von dem Formbereich des Werkzeugs auf den Gewindegang des ersten Bauteils. Zur Ausbildung der angesprochenen reibungserhöhenden Maßnahmen ist es daher erfindungsgemäß vorgesehen, dass zumindest ein Teilbereich des Formbereichs durch einen Strahlprozess derart bearbeitet wird, dass dessen Rauigkeit erhöht wird. Beim Ausbilden des Gewindegangs an dem ersten Bauteil überträgt sich somit die gegenüber einer glatten Oberfläche erhöhte Rauigkeit des Formbereichs auf die Oberfläche des Gewindegangs, wobei die Rauigkeit nichts anderes darstellt als die erfindungsgemäß vorgesehenen Deformationen zur Ausbildung der reibungserhöhenden Maßnahmen. Das Ausbilden des Teilbereichs an dem Werkzeug mit der erhöhten Rauigkeit kann gezielt durch eine entsprechend lange Bearbeitungsdauer oder entsprechend ausgewählte Strahlmedien bei der Werkzeugbearbeitung eingestellt werden. Beispielsweise können je nach Einsatzfall z.B. Partikel aus Korund, Sand, Hartguss, Glasperlen o.ä. eingesetzt werden, um unterschiedlich große Rauigkeiten zu erzielen. Ebenso können diese Partikel durch eine gezielte Größenauswahl bzw. Variation der Geometrie eine gewünschte Rauhigkeitserhöhung der Oberfläche an dem Formbereich ermöglichen.

Erfindungsgemäß wird unter einem Teilbereich der Oberfläche des Werkzeugs beispielsweise ein Teilbereich verstanden, der eine Flanke des Gewindegangs an dem ersten Bauteil ausbildet, die beim Wiederlösen des zweiten Teils vom ersten Teil maßgeblich für die Höhe des Lösemoments verantwortlich ist. Weiterhin wird unter einem Teilbereich zumindest ein Teil der axialen Länge des Werkzeugs verstanden, der bei der Erzeugung eines Gewindegangs an dem ersten Bauteil wesentlich ist.

In bevorzugter Weiterbildung des Werkzeugs ist es vorgesehen, dass die Oberfläche in dem Teilbereich Eindellungen und die Eindellungen begrenzende Erhöhungen aufweist, und dass die Erhöhungen in Umfangsrichtung eine unterschiedliche Höhe aufweisen. Derartige Eindellungen, die typischerweise beim Strahlen der Oberfläche des Werkzeugs entstehen, können durch eine Variation des Strahlwinkels in Bezug zur Werkzeugoberfläche die gewünschten, einseitig in der Höhe vergrößerten Erhöhungen erzeugen. Derartige, unsymmetrisch in Bezug zur Oberfläche ausgebildete Erhöhungen haben den Vorteil, dass diese je nach Schraubrichtung des mit dem ersten Bauteil zusammenwirkenden zweiten Bauteils unterschiedlich hohe, die Reibung erhöhende Momente erzeugen, derart, dass sich in Löserichtung des zweiten Bauteils vom ersten Bauteil ein erhöhtes Lösemoment einstellt.

Zuletzt umfasst die Erfindung auch ein Kraftstoffeinspritzventil mit einer erfindungsgemäßen Hochdruckanschlussvorrichtung. Ein derartiges Kraftstoffeinspritzventil hat den Vorteil, dass es selbst unter Verwendung unterschiedlicher Kraftstoffzuführleitungen oder unterschiedlicher Leitungstypen sowie bei Verwendung reibungsreduzierender Maßnahmen in Form von Schmiermitteln stets bestimmte Mindestlösemomente beim Wiederlösen der Kraftstoffzuführleitung sicherstellt bzw. gewährleistet.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teilbereich eines Kraftstoffeinspritzventils mit einer erfindungsgemäß ausgebildeten Hochdruckanschlussvorrichtung zwischen einem Außengewinde des Kraftstoffeinspritzventils und einem Innengewinde einer Überwurfmutter einer Kraftstoffzuführleitung im Längsschnitt,
- Fig. 2: eine teilweise geschnittene Darstellung durch die Hochdruckanschlussvorrichtung gemäß Fig. 1 mit unterschiedlich ausgebildeten Deformationen am Gewindegang des Außengewindes des Kraftstoffeinspritzventils,
- Fig. 3: eine Seitenansicht auf einen Teilbereich eines Gewindegangs mit als Prägungen ausgebildeten Deformationen,
- Fig. 4: einen Schnitt in der Ebene IV-IV der Fig. 3,
- Fig. 5: eine Draufsicht auf einen Gewindegang eines Außengewindes, wobei die Deformation im Bereich der Gewindespitze des Gewindegangs erzeugt ist,
- Fig. 6: eine Seitenansicht auf den Ausschnitt gemäß Fig. 5,
- Fig. 7: einen Teilbereich eines Werkzeugs zum Herstellen einer Hochdruckanschlussvorrichtung an einem ersten Bauteil während einer Strahlbehandlung zur Erzeugung unterschiedlich rauer Oberflächenabschnitte,
- Fig. 8: einen gegenüber Fig. 7 abgewandelten Strahlprozess an einem Gewindegang eines Werkzeugs zur Erzeugung einer speziell geformten Oberfläche an dem Werkzeug,
- Fig. 9: Ansichten von unterschiedlich ausgebildeten, eine erhöhte Rauhigkeit aufweisenden Werkzeugoberflächen und
- Fig. 10: einen Schnitt im Bereich eines Gewindegangs eines ersten Bauteils, bei der die Oberfläche entsprechend der Fig. 8 behandelt wurde, in Zusammenwirken mit einem zweiten Bauteil.

Gleiche Elemente bzw. Elemente mit gleicher Funktion sind in den Figuren mit den gleichen Bezugsziffern versehen.

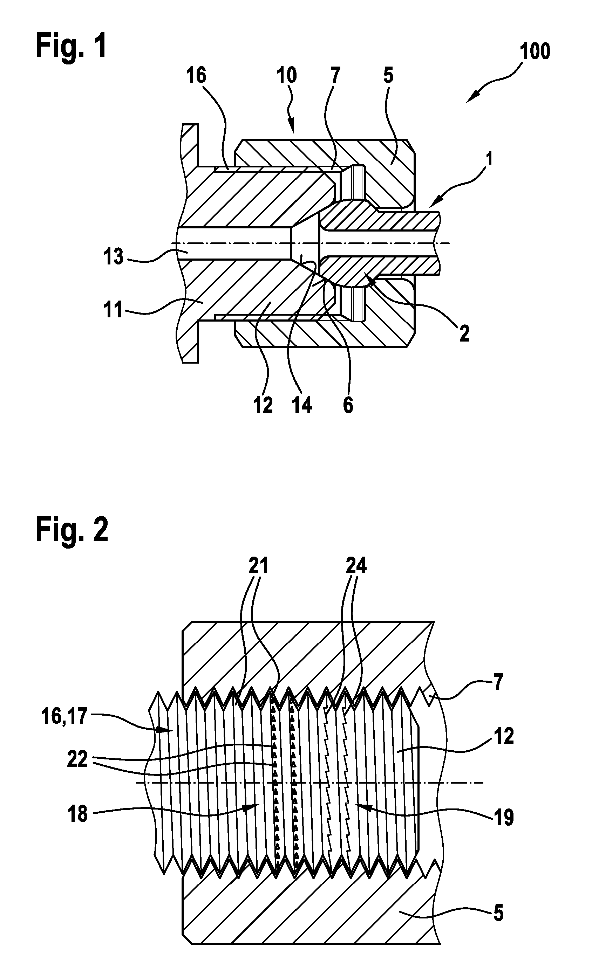

In der Fig. 1 ist ein Teilbereich eines ersten Bauteils in Form eines Gehäuses 11 eines Kraftstoffeinspritzventils 100 dargestellt. Bei dem Kraftstoffeinspritzventil 100 handelt es sich insbesondere um ein Kraftstoffeinspritzventil 100 einer selbstzündenden Brennkraftmaschine, wobei der Kraftstoffdruck in dem Kraftstoffeinspritzventil 100 während des Betriebs der Brennkraftmaschine insbesondere mehr als 2000bar betragen kann.

Das Gehäuse 11 weist einen Kraftstoffanschlussstutzen 12 auf, über den das Kraftstoffeinspritzventil 100 mit Kraftstoff versorgbar ist. Insbesondere zentrisch innerhalb des Kraftstoffanschlussstutzens 12 ist hierzu eine mit einem (nicht dargestellten) Hochdruckraum des Kraftstoffeinspritzventils 100 hydraulisch verbundene Zuführbohrung 13 mit einem kegelförmigen, als Dichtfläche dienenden Einlaufbereich 14 vorgesehen.

Der Kraftstoffanschlussstutzen 12 ist mit einer Kraftstoffzuführleitung 1 verbindbar, die insbesondere mit einem unter Hochdruck stehenden Speicher (Rail) des Kraftstoffeinspritzsystems auf der dem Kraftstoffeinspritzventil 100 abgewandten Seite verbunden ist. Auf der dem Kraftstoffeinspritzventil 100 zugewandten Seite weist die Kraftstoffzuführleitung 1 einen ballig bzw. im Außendurchmesser bereichsweise vergrößert ausgebildeten Endbereich 2 auf, der mit einer Überwurfmutter 5 wirkverbunden angeordnet ist. Die Überwurfmutter 5 dient der hydraulisch druckfesten Verbindung der Kraftstoffzuführleitung 1 mit dem Kraftstoffanschlussstutzen 12 des Gehäuses 11. Hierzu weist der Endbereich 2 der Kraftstoffzuführeinrichtung 1 auf der dem Kraftstoffanschlussstutzen 12 zugewandten Seite an seinem Außenumfang eine kegelförmig ausgebildete Dichtfläche 6 auf, die bei einer Axialverspannung mit dem Einlaufbereich 14 des Kraftstoffanschlussstutzens 12 die druckfeste bzw. mediendichte Verbindung ausbildet, um ein Ausströmen von Kraftstoff aus dem Verbindungsbereich zwischen dem Gehäuse 11 und der Kraftstoffzuführleitung 1 zu verhindern. Zwischen der ein zweites Bauteils ausbildenden Überwurfmutter 5 und dem Kraftstoffanschlussstutzen 12 ist eine erfindungsgemäße Hochdruckanschlussvorrichtung 10 ausgebildet.

Die Hochdruckanschlussvorrichtung 10 umfasst ein an dem Kraftstoffanschlussstutzen 12 ausgebildetes Außengewinde 16, das mit einem an der Überwurfmutter 5 ausgebildeten Gegengewinde 7 in Form eines Innengewindes zusammenwirkt. Die erfindungsgemäße Ausbildung der Hochdruckanschlussvorrichtung 10 ermöglicht die Gewährleistung eines bestimmten Mindestlösedrehmoments zum Lösen der Überwurfmutter 5 von dem Kraftstoffanschlussstutzen 12. Hierzu ist die Geometrie des Gewindegangs 17 des Außengewindes 16 auf erfindungsgemäße Art und Weise besonders ausgebildet, wie nachfolgend anhand der Fig. 2 bis 6 näher erläutert wird:

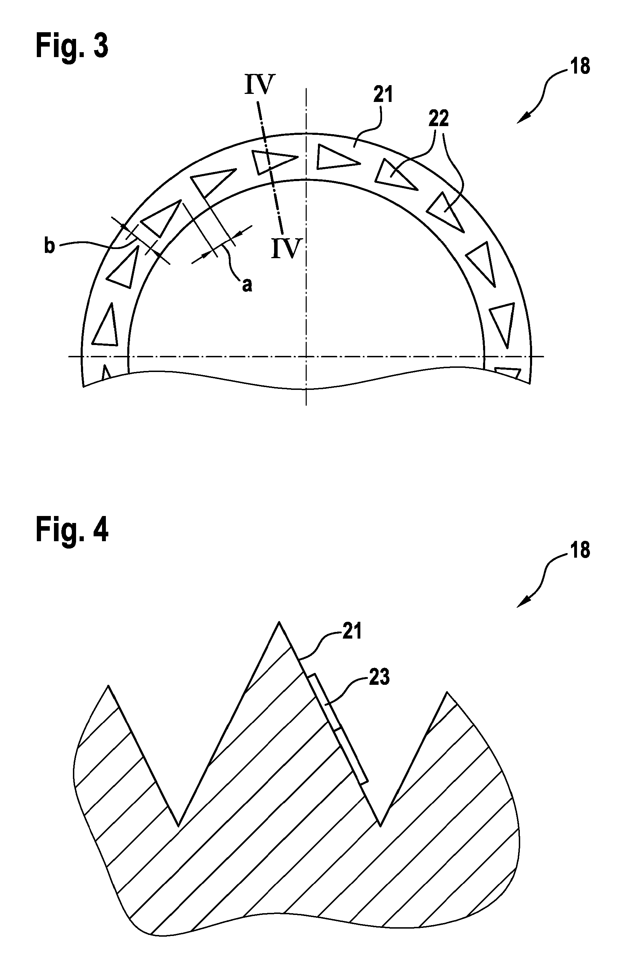

In der Fig. 2 ist erkennbar, dass das Außengewinde 16 des Kraftstoffanschlussstutzens 12 an dem Gewindegang 17 in zwei Teilbereichen 18, 19 der Länge des Außengewindes 16, an der dieses mit dem Gegengewinde 7 der Überwurfmutter 5 zusammenwirkt, mit reibungserhöhenden Maßnahmen ausgestattet ist. Der in den Fig. 3 und 4 vergrößert bzw. im Detail dargestellte erste Teilbereich 18 zeigt die reibungserhöhenden Maßnahmen in Form von Deformationen an einer von zwei seitlichen Flanken 21 des Gewindegangs 17, beispielsweise über einen Drehwinkelbereich von 720° des Gewindegangs 17. Die Deformationen an der einen Flanke 21 umfassen eine Vielzahl von beabstandet zueinander angeordneten Prägungen 22 in der Oberfläche der Flanke 21. Die Prägungen 22, die beispielhaft alle identisch ausgebildet sind, werden vorzugsweise gleichzeitig mit der Ausbildung des Außengewindes 16, welches durch Rollieren erfolgt, durch ein entsprechend ausgebildetes, nicht dargestelltes (Rollier-) Werkzeug hergestellt bzw. ausgebildet. Die Deformationen bzw. Prägungen 22 stellen eine von der Idealform bzw. Idealgeometrie des Gewindegangs 17 abweichende Geometrie dar. Insbesondere weisen die Prägungen 22 in Umfangsrichtung des Gewindegangs 17 betrachtet einen über die Oberfläche der Flanke 21 herausragenden Vorsprung 23 auf, dessen Breite b sich in Umfangsrichtung gesehen bis auf Null verringert, so dass sich in Draufsicht eine in etwa dreieckförmige Form der Prägungen 22 ergibt. Zwischen den einzelnen Prägungen 22 ist ein im Ausführungsbeispiel jeweils gleicher Abstand a ausgebildet. Die Orientierung der Prägungen 22 bzw. der Vorsprünge 23 ist derart, dass beim Lösen der Überwurfmutter 5 deren Gegenverzahnung 7 derart mit den Vorsprüngen 23 der Prägungen 22 zusammenwirkt, dass in Löserichtung der Überwurfmutter 5 betrachtet durch die Anlage an den Vorsprüngen 23 die Reibung zwischen dem Außengewinde 16 und dem Gegengewinde 7 erhöht ist.

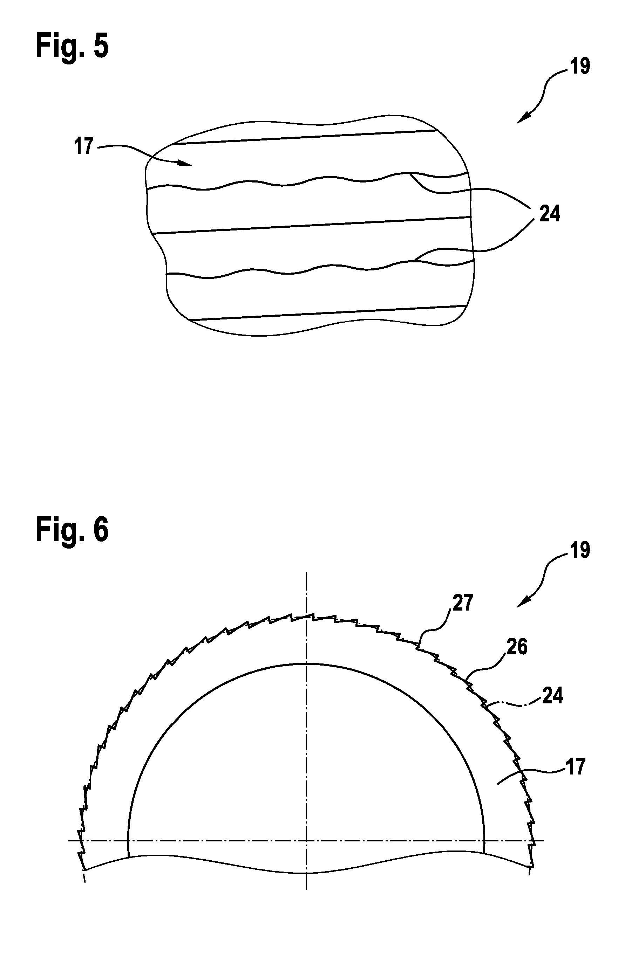

In den Fig. 5 und 6 ist der zweite Teilbereich 19 aus der Fig. 2 in zwei unterschiedlichen Varianten vergrößert bzw. im Detail näher dargestellt. Insbesondere erkennt man, dass der Bereich der radial äußeren Gewindespitze 24 des Gewindegangs 17 ebenfalls beispielhaft über einen Drehwinkelbereich von 720° deformiert ausgebildet ist. Hierzu ist die Gewindespitze 24 entweder mit einer senkrecht zur Umfangsrichtung der Gewindespitze 24 verlaufenden, gewellten, oder aber mit einer in radialer Richtung der Gewindespitze 24 gezahnten Form ausgebildet. In der Fig. 5 ist die Gewindespitze 24 gewellt ausgebildet, während aus der Fig. 6 erkennbar ist, dass die Gewindespitze 24 eine Verzahnung 26 aufweist. Die Form der Verzahnung 26 mit einer Spitze 27 ist derart, dass sich in Analogie zu den Prägungen 22 bei Lösen der Überwurfmutter 5 von dem Außengewinde 16 des Kraftstoffanschlussstutzens 12 ein erhöhtes Lösemoment erforderlich ist, da die gewellte bzw. gezahnte Form der Gewindespitze 24 eine reibungserhöhende Maßnahme zum Gegengewinde 7 der Überwurfmutter 5 ausbildet.

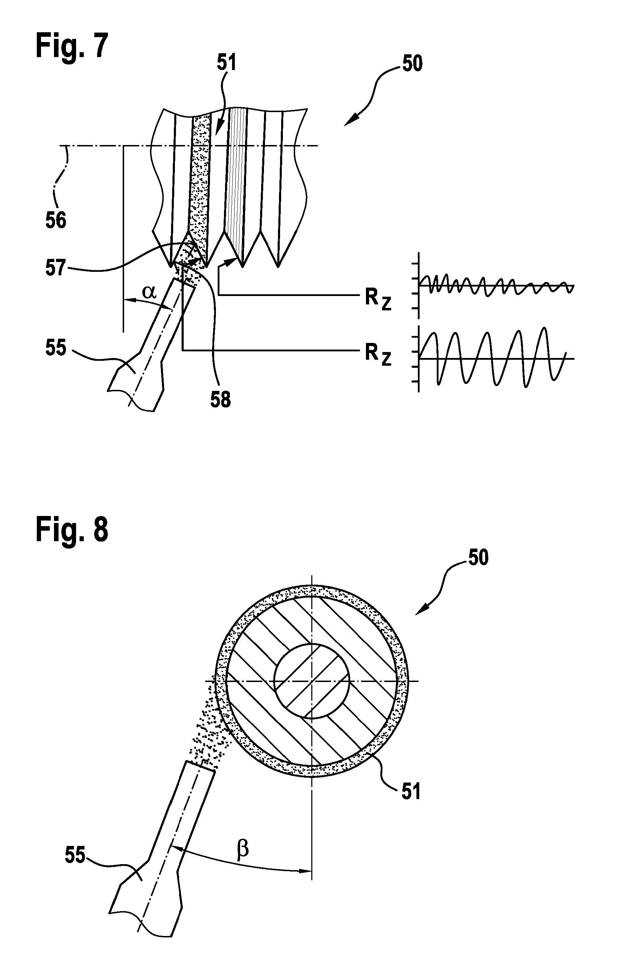

In der Fig. 7 ist ein Teilbereich eines erfindungsgemäßen Werkzeugs 50 zur Ausbildung des Gewindegangs 17 bzw. des Außengewindes 16 an dem Kraftstoffanschlussstutzen 12 (Fig. 2) dargestellt. Insbesondere erkennt man einen gewindeförmig ausgebildeten Formbereich 51, der beim spanlosen Fertigen (Rollieren bzw. Walzen) des Kraftstoffanschlussstutzens 12 den Gewindegang 17 bzw. das Außengewinde 16 in dem Kraftstoffanschlussstutzen 12 erzeugt. Ferner erkennt man eine Strahldüse 55, die um einen Winkel α zu einer senkrecht zur Längsachse 56 des Werkzeugs 50 angeordneten Ebene ausgerichtet ist. Insbesondere wird durch eine derartige Ausrichtung der Strahldüse 55 eine Oberflächenbehandlung einer ersten Flanke 57 des Formbereichs 51 ermöglicht, während eine zweite Flanke 58 zumindest im Wesentlichen nicht oberflächenbehandelt wird. Ferner erkennt man anhand der Fig. 7, dass die Rauigkeit R_{Z} bei der ersten Flanke 57, die in Wirkverbindung mit der Strahldüse 55 angeordnet ist, größer ist als bei einer Flanke, die nicht strahlbehandelt wird. Wesentlich dabei ist, dass sich die erhöhte Rauigkeit R_{Z} der ersten Flanke 57 des Formbereichs 51 beim Ausbilden des Gewindegangs 17 an dem Kraftschlussanstutzen 12 entsprechend in einer erhöhten Rauigkeit an dem Gewindegang 17 widerspiegelt. Wesentlich dabei ist, dass die erste Flanke 57 diejenige Flanke ist, die beim Wiederlösen der Überwurfmutter 5 von dem Kraftstoffanschlussstutzen 12 in Wirkverbindung mit dem Gegengewinde 7 der Überwurfmutter 5 gelangt. Selbstverständlich ist es auch denkbar, den gesamten Formbereich 51 entsprechend der ersten Flanke 57 zu strahen, d.h. mit erhöhter Rauigkeit auszustatten.

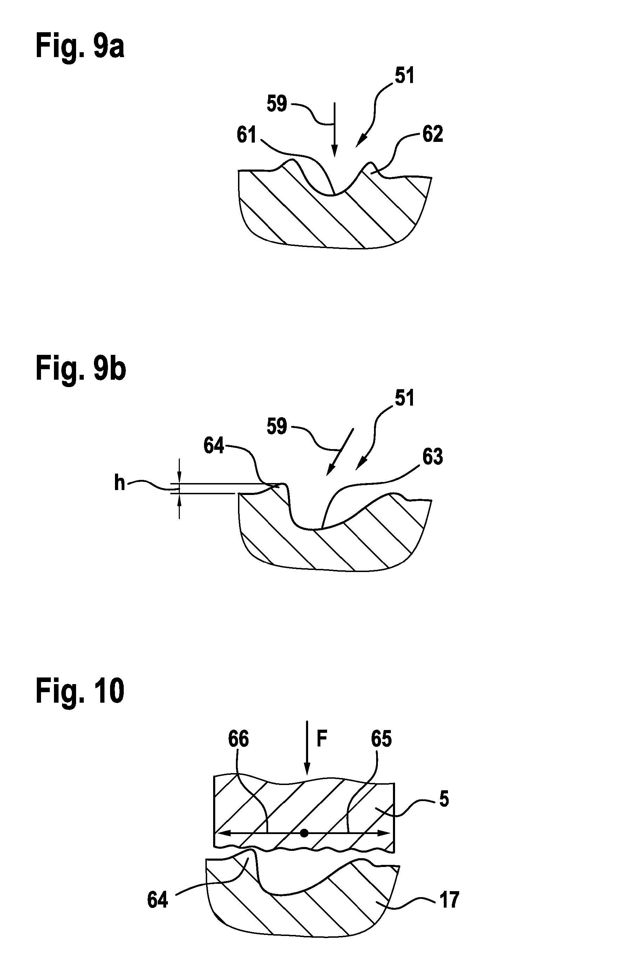

In der Fig. 8 ist eine gegenüber Fig. 7 modifizierte Anordnung der Strahldüse 55 zum Werkzeug 50 gezeigt. Insbesondere erkennt man, dass die Strahldüse 55 in Bezug zum Formbereich 51 nahezu tangential bzw. unter einem Winkel ß angeordnet ist. Eine derartige Anordnung der Strahldüse 55 bewirkt, dass sich eine spezielle, unsymmetrische Oberflächenstruktur einstellt. Hierzu wird zunächst auf die Fig. 9a verwiesen, bei der bei einer senkrechten Ausrichtung einer Strahldüse 55 zur Oberfläche des Formbereichs 51, was durch den Pfeil 59 für die Partikel der Strahldüse 55 verdeutlicht sein soll, Eindellungen 61 erzeugt werden, die von einer ringförmig um die Eindellung 61 ausgebildeten Erhebung 62 begrenzt sind. Dies entspricht zumindest im Wesentlichen den Eindellungen 61 bzw. Erhebungen 62, die bei einer Anordnung gemäß Fig. 7 in der Oberfläche des Formbereichs 51 erzeugt werden, bei der der Winkel α bzw. die Strahlrichtung derart gewählt ist, dass die Strahldüse 55 zumindest in etwa senkrecht zur Oberfläche der ersten Flanke 57 verläuft. Weiterhin ist in der Fig. 9b eine Eindellung 63 sowie eine Erhebung 64 dargestellt, wie sie bei einem Verfahren bzw. einer Anordnung der Strahldüse 55 entsprechend der Fig. 8 unter einem Winkel ß erzeugt wird. Insbesondere ist dabei erkennbar, dass die Erhöhung 64 eine Höhe h aufweist, die in Umfangsrichtung der Erhöhung 64 betrachtet unterschiedlich groß ist. Dieser Effekt wird gemäß der Fig. 10 verwendet, in der man einen Teilbereich der Überwurfmutter 5 im Zusammenwirken mit dem Gewindegang 17 erkennt, wie er durch ein Werkzeug 50 erzeugt wird, das entsprechend der Anordnung der Fig. 8 oberflächenbehandelt ist. Insbesondere erkennt man, dass die Anordnung der Erhöhung 64 derart ist, dass beim Verdrehen der Überwurfmutter 5 über das Gegengewinde 7 in Montagerichtung 65 ein geringeres Hemmmoment erzeugbar ist als in Richtung der Demontagerichtung 66, bei der das Gegengewinde 7 mit dem die größere Höhe h aufweisenden Bereich der Erhöhung 64 derart zusammenwirkt, dass eine erhöhte Reibung erzeugt wird.

Die soweit beschriebene Hochdruckanschlussvorrichtung 10 kann in vielfältiger Art und Weise abgewandelt bzw. modifiziert werden, ohne vom Erfindungsgedanken abzuweichen. Insbesondere ist es beispielsweise denkbar, dass die Deformationen bzw. Prägungen 22 nicht nur über einen Teilbereich des Außengewindes 16, sondern über dessen gesamte Länge ausgebildet sind. Darüber hinaus sind selbstverständlich andere Formen von Prägungen 22 oder Deformationen, ggf. in Kombination, denkbar. Weiterhin ist es zwar bevorzugt vorgesehen, dass die Deformationen gleichzeitig mit der Herstellung des Außengewindes 16 erzeugt werden, die Erfindung soll jedoch nicht auf ein derartiges Fertigungsverfahren eingeschränkt sein. Vielmehr ist es auch denkbar, dass in einem ersten Fertigungsschritt zunächst das Außengewinde 16 erzeugt wird, und dass anschließend in einen zweiten, zeitlich sich daran anschließenden Fertigungsschritt die Deformationen bzw. Prägungen 22 ausgebildet werden. Auch ist es denkbar, dass im Gegensatz zu einer spanlosen Ausbildung der Deformationen derartige Deformationen auch durch spanende Fertigungsmethoden erzeugbar sind.

## Patentansprüche

1. Hochdruckanschlussvorrichtung (10) an einem ersten Bauteil (11), wobei das erste Bauteil (11) ein Gewinde (16) mit einem Gewindegang (17) aufweist, wobei das Gewinde (16) dazu ausgebildet ist, mit einem Gegengewinde (7) eines zweiten Bauteils (5) zusammenzuwirken, und wobei das erste Bauteil (11) Mittel zur Erhöhung des Lösemoments für das Gegengewinde (7) aufweist,
**dadurch gekennzeichnet,**
**dass** die Mittel als reibungserhöhende Maßnahmen (22; 27) an dem Gewindegang (17) ausgebildet sind.

2. Hochdruckanschlussvorrichtung nach Anspruch 1,
**dadurch gekennzeichnet,**
**dass** die reibungserhöhenden Maßnahmen (22; 27) eine von der Idealform abweichende Geometrie des Gewindegangs (17) umfasst.

3. Hochdruckanschlussvorrichtung nach Anspruch 1 oder 2,
**dadurch gekennzeichnet,**
**dass** die reibungserhöhenden Maßnahmen (22; 27) als eine Deformation des Gewindegangs (17) ausgebildet sind.

4. Hochdruckanschlussvorrichtung nach einem der Ansprüche 1 bis 3,
**dadurch gekennzeichnet,**
**dass** die reibungserhöhenden Maßnahmen (22, 27) lediglich an einem Teilbereich des Gewindegangs (17) ausgebildet sind.

5. Hochdruckanschlussvorrichtung nach Anspruch 4,
**dadurch gekennzeichnet,**
**dass** der Teilbereich ein Teil der Länge des Gewindes (16) und/oder ein Teil des Querschnitts des Gewindegangs (17) ist.

6. Hochdruckanschlussvorrichtung nach einem der Ansprüche 1 bis 5,
**dadurch gekennzeichnet,**
**dass** die reibungserhöhenden Maßnahmen (22) als wenigstens eine Prägung an einer Flanke (21) des Gewindegangs (17) ausgebildet ist.

7. Hochdruckanschlussvorrichtung nach einem der Ansprüche 1 bis 6,
**dadurch gekennzeichnet,**
**dass** die reibungserhöhenden Maßnahmen (27) als Teil einer Verzahnung (26) an einer Gewindespitze (24) des Gewindes (16) ausgebildet ist.

8. Hochdruckanschlussvorrichtung nach einem der Ansprüche 1 bis 7,
**dadurch gekennzeichnet,**
**dass** die reibungserhöhenden Maßnahmen als eine gewellt deformierte Gewindespitze (24) des Gewindes (16) ausgebildet ist.

9. Hochdruckanschlussvorrichtung nach einem der Ansprüche 1 bis 8,
**dadurch gekennzeichnet,**
**dass** das erste Bauteil (11) eine Komponente einer Kraftstoffeinspritzeinrichtung, insbesondere ein Gehäuse eines Kraftstoffeinspritzventils (100), und das Gewinde (16) ein Außengewinde ist.

10. Verfahren zur Herstellung einer Hochdruckanschlussvorrichtung (10), insbesondere nach einem der Ansprüche 1 bis 9, bei dem an einem ersten Bauteil (11) ein Gewinde (16) mit einem Gewindegang (17) durch einen spanlosen Umformvorgang erzeugt wird,
**dadurch gekennzeichnet,**
**dass** die Geometrie des Gewindegangs (17) mit reibungserhöhenden Maßnahmen (22; 27) versehen wird.

11. Verfahren nach Anspruch 10,
**dadurch gekennzeichnet,**
**dass** die reibungserhöhenden Maßnahmen (22; 27) gleichzeitig mit der Herstellung des Gewindegangs (17) erzeugt werden.

12. Verfahren nach Anspruch 10 oder 11,
**dadurch gekennzeichnet,**
**dass** der Gewindegang (17) zumindest bereichsweise deformiert wird.

13. Werkzeug (50) zum spanlosen Herstellen einer Hochdruckanschlussvorrichtung (10) an einem ersten Bauteil (11), insbesondere einer Hochdruckanschlussvorrichtung (10) nach einem der Ansprüche 1 bis 9 bzw. zur Herstellung einer Hochdruckanschlussvorrichtung (10) nach einem der Ansprüche 9 bis 12, mit einem die Geometrie an einem Gewindegang (17) des ersten Bauteils (11) ausbildenden Formbereich (51),
**dadurch gekennzeichnet,**
**dass** der Formbereich (51) zumindest in einem Teilbereich (57) eine durch einen Strahlprozess hervorgerufene erhöhte Rauigkeit (R_{Z}) aufweist.

14. Werkzeug nach Anspruch 13,
**dadurch gekennzeichnet,**
**dass** die Oberfläche in dem Teilbereich (57) Eindellungen (63) und die Eindellungen (63) begrenzende Erhöhungen (64) aufweist, und dass die Erhöhungen (64) in Umfangsrichtung unterschiedliche Höhen (h) aufweisen.

15. Kraftstoffeinspritzventil (100) mit einer Hochdruckanschlussvorrichtung (10) nach einem der Ansprüche 1 bis 9.
